# EUROPEAN PATENT APPLICATION

(11) **EP 2 079 263 A1**
(43) Date of publication of application: **15.07.2009**
(21) Application number: 08000510.1
(22) Date of filing: 11.01.2008
(51) Int. Cl.: H04W 48/08

(54) **Method, device and system for access point reselection in a mobile communications network**

(71) Applicant: Nokia Siemens Networks Oy, 02610 Espoo (FI)
(72) Inventor: Kalle, Jokio, 02100 Espoo (FI); Mathias, Pieroth, 81541 Munich (DE)
(74) Representative: Bruglachner, Thomas E.

(57) **Abstract**

A method and a device for data processing in a communication network are provided, the method comprising the steps of (i) a mobile terminal obtains a scrambling code information, wherein said scrambling code information is reserved for a group of femto access points; and (ii) the mobile terminal processes said scrambling code information. Further, a communication system comprising such device is provided.

## Description

The invention relates to a method and to a device for data processing in a communication network and to a system comprising such a device.

Pursuant to developments of cellular networks, UMTS indoor coverage shall be improved and new business opportunities for mobile operators emerge by supplementing their cellular network, e.g., UMTS, by a so-called "femto system".

Currently, UMTS radio networks comprise a large number of macro cells (e.g., UTRAN cells) to primarily support external radio coverage. For each macro cell, parameters as transceiver location, transmission power etc. are controlled and configured by the Mobile Network Operator (MNO) via Operation and Maintenance (O&M).

To improve indoor coverage and offer new business opportunities to mobile operators, a new application intents to convey radio coverage directly inside the customers' premises utilizing transceiver stations also referred to as femto cells or femto access points (FAPs).

Such a femto access point is assigned to an end user and it may in particular be directly installed in the end user's home environment.

The femto access point is preferably directly connected to a fixed line (e.g., via an xDSL connection). Hence, services may be provided at a significantly lower rate compared to an access via macro cells.

Femto access points as well as macro cells may at least partially utilize similar radio access technologies which may advantageously allow legacy mobile phones to be operative with the femto cell.

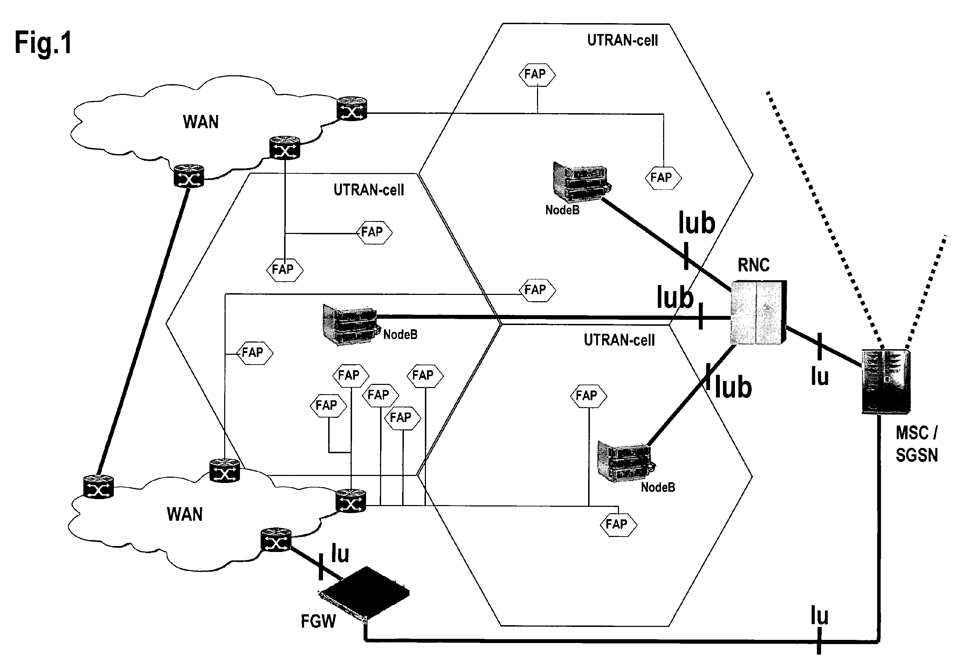

**Fig.1** shows a network topology of a femto system within a UMTS network. Particular characteristics of said network topology are:
(a) The femto access points (FAPs) are connected to the UMTS core network (CN) via a femto gateway (FGW);
(b) From the perspective of the UMTS core network, the femto gateway behaves like any other UTRAN radio network controller (RNC).
(c) The femto gateway concentrates traffic of several femto access points.
(d) Each femto access point provides a standard Uu radio interface, i.e. legacy UMTS mobile phones (user equipments UE) may get connected to the femto access point and may use services provided by the femto access point.
(e) A significant number of femto access points may have to be supported, e.g., one femto gateway may be connected to up to 20.000 femto access points.
(f) The femto access points are more or less randomly distributed throughout the macro cells according to the premises at which the users connect their femto access points to the fixed lines.
(g) A diameter of typical femto cell is small (e.g., 30m) compared to the macro cell.

As long as the user is outside the range of his home femto access point, he receives mobile services from the UMTS cellular network via macro cells. As soon as the user moves into the supported area of his home femto access point, the connection may switch from the macro cell to the femto cell and the user receives the same (or better) services via his femto access point in particular at a lower rate.

A feature of the network shown in Fig.1 is the automatic switching of the mobile connection from the macro cell to the femto access point as soon as the mobile terminal enters the range of the femto access point.

Cell re-selection is a known procedure in UTRAN and needs to be supported in both the macro cells and the femto cells (since both cell types support Uu interface).

However, it is not clear as how the mobile terminal may find its way from the macro cell to the femto cell or to the femto access point and how it shall meet the following requirements:
(1) A cell re-selection needs to be fast. Hence, the mobile terminal shall be able to enter the femto cell a few seconds after it became aware of the presence of such femto cell.
(2) Preferably, the approach has to work for existing mobile equipment or it should at least minimize an impact on the mobile terminals.
(3) An impact on legacy macro cells and core network has to be minimized. Especially, OPEX (operational expenditure) has to be minimized.

It is difficult to optimize all these requirements at the same time, in particular because of the following reasons:

As set forth, legacy concepts shall apply. However, legacy cell re-selection concept works with neighbor cell lists (NCL) distributed via a broadcast channel. The neighbor cell list comprises macro cells as a result to the MNO's network planning. Each cell in the neighbor cell list is uniquely mapped to a macro cell of the network and uniquely identified by a corresponding cell ID. The mobile terminal (also referred to as user equipment, UE) finds a neighbor or adjacent macro cell by virtue of a frequency information and a primary scrambling code (P-SC) broadcast via the neighbor cell list by the RNC.

With a mobile terminal camping within an UTRAN macro cell, the mobile terminal obtains the neighbor cell list from the broadcast channel of the serving macro cell. The neighbor cell list conveys candidates for cell re-selection. Only if the mobile terminal does not find for about 20sec any of those macro cells included in the neighbor cell list, it will search on its own for other cells that may be available.

Hence, macro cell information together with femto cell information may have to be included in the neighbor cell list of the serving macro cell. This, however, would lead to significant drawbacks. Usually, the MNO performs a detailed planning regarding its macro cells to set up a running network with optimized coverage and hence neighbor cell lists of each serving macro cell. Such planning is not feasible on a femto cell level, in particular because of the large number of femto access points that may be deployed within each macro cell and because of the unpredictable deployment locations of said femto access points that may in addition frequently be changed according to particular user demands. It is not feasible without significantly high OPEX to keep track of all locations of all femto access points, in particular as each change would lead to an update of the MNO's database.

Another disadvantage is the fact that existing UTRAN neighbor cell lists allow distribution of at most 32 neighbor cells. Since a femto cell is significantly smaller than the macro cell, there may be a lot more than 32 femto cells per macro cell.

The objective is to overcome the disadvantages as described above and in particular to provide a data processing, e.g., re-selection, relocation and/or handover of a mobile terminal from a macro cell towards a femto access point.

This problem is solved according to the features of the independent claims. Further embodiments result from the depending claims.

In order to overcome this problem, a method for data processing in a communication network is provided comprising the following steps:
- a mobile terminal obtains a scrambling code information, wherein said scrambling code information is reserved for a group of femto access points;
- the mobile terminal processes said scrambling code information.

It is to be noted that a femto access point may be a or may be associated with a home NodeB, a home base station, a femto cell or a femto base station. Such femto access point may in particular be subject to evaluation within the context of 3.5G (HSPA/WCDMA) ("3.5G home NodeB"). The home NodeB may in particular be deployed as an end-user type of equipment and hence to a certain extent self-installation/organization functionality may be required and/or advantageous for such a device, in contrast to coordinated operator driven network-planning for macro-deployments.

Hence, a group of femto access points may use reserved scrambling code information. Such scrambling code information is preferably not used by the macro cells. In particular, several femto access points may even use the same reserved scrambling code information within one macro cell.

It is an embodiment that the mobile terminal processes said scrambling code information by scanning for at least one femto access point or by not scanning for a femto access point.

In an embodiment, the scrambling code information is provided by a base station of the communication network.

In another embodiment, said scrambling code information is provided with a neighbor cell list (NCL).

Such neighbor cell list may in particular be broadcast by a radio network controller (RNC) of the UTRAN.

In a further embodiment, the neighbor cell list comprises a frequency information that is utilized by the mobile terminal.

Advantageously, the mobile terminal upon reception of the frequency information and the scrambling code information may be able to scan for at least one particular femto access point.

In a next embodiment, the neighbor cell list is broadcast by and/or in a macro cell.

It is also an embodiment that the neighbor cell list comprises a femto cell information that is associated with the scrambling code information.

Such femto cell information may allow the mobile terminal to distinguish between records of the neighbor cell list that are directed to a femto system (at least one femto cell) and records that refer to macro cells.

Pursuant to another embodiment, the mobile terminal searches for the femto access point if the neighbor cell list indicates that the scrambling code information is used by a femto cell.

As indicated, a mobile terminal may be configured to access femto cells or not to access femto cells. In case the mobile terminal is not to access the femto system at all, it may not have to scan for femto cells. This can be achieved by said femto cell information indicating which frequencies and scrambling codes are exclusively used by the femto system. Not scanning for such cells to which the mobile terminal is configured to not get connected saves battery power.

It is also an embodiment that a scrambling code of the scrambling code information is used by more than one femto access point.

In particular several femto access points within a macro cell (or within different macro cells) may use the same scrambling code.

According to an embodiment, the mobile terminal obtains an identity information from the femto access point.

According to another embodiment, the identity information comprises an identifier of the femto access point.

In yet another embodiment, the mobile terminal conveys the identity information to a radio network controller (RNC).

Hence the radio network controller of the macro cell network becomes aware of the identity information.

According to a next embodiment, the identity information is conveyed via a measurement report from the mobile terminal to the radio network controller. The radio network controller may in particular convey the identity information to a core network (CN).

Pursuant to yet an embodiment, the core network initiates and/or processes a handover and/or a relocation to the femto access point.

According to an embodiment, the identity information comprises an identifier of the femto gateway associated with the femto access point.

It is to be noted that the UTRAN may recognize the femto gateway as another of its radio network controllers and hence upon receiving the identity of the femto gateway, handover and/or relocation may be initiated or processed by utilizing said femto gateway as a common radio network controller. The femto gateway, however, is aware of the femto access point via which the mobile terminal can be reached and controls the radio communication towards such femto access point.

It is also an embodiment, that the handover and/or relocation is initiated and/or processed via the femto access gateway identified by its identifier.

The problem stated above is also solved by a device for data processing comprising a processor unit and/or a hard-wired circuit (e.g., an ASIC or an FPGA) that is equipped and/or arranged such that the method as described herein is executable thereon.

According to an embodiment, the device is a communication device, in particular a mobile terminal or a base station

The problem stated supra is further solved by a communication system comprising the device as described herein.

Embodiments of the invention are shown and illustrated in the following figures:
- Fig.2: shows a neighbor cell list comprising a frequency information, a scrambling code information and a femto cell information;
- Fig.3: shows a symbolic topology that visualizes a mobile terminal providing the identity information depending on the FAP that is seen as a candidate for a handover and/or relocation.

Hereinafter, the mobile terminal mentioned may refer to or comprise any terminal, in particular any device comprising a functionality of a user equipment (UE).

The approach provided allows in particular that an entry of a neighbor cell list (NCL) can be associated with more than one cell, in particular with more than one femto cell or femto access point. This approach may still cope with legacy UTRAN systems and in addition it may provide an efficient solution to enable a significant number of femto cells within one UTRAN macro cell.

### Support of cell re-selection from the macro cell to the femto cell

A mobile network operator (MNO) reserves a small set of scrambling codes, in particular of primary scrambling codes (P-SCs), for an exclusive use by the femto cells.

Those reserved scrambling codes are included in the NCL of all UTRAN macro cells that allow a deployment of femto cells within their coverage area, irrespective of the fact if there are femto cells deployed using these reserved scrambling codes in the macro cell area or not.

Preferably, several femto cells within a macro cell may use the same reserved scrambling code.

Upon detection of the reserved scrambling codes together with frequency information broadcast via the NCL by the radio network controller (RNC), the mobile terminal (user equipment, UE) may be triggered to search for the respective femto cells.

It is to be noted that a reserved scrambling code together with a frequency information can efficiently be utilized by the mobile terminal to find the respective femto cell(s) and to initiate cell re-selection, if applicable.

Within a macro-RNC database, all cells comprising reserved scrambling codes may be labeled as "dummy cells", i.e. such cells are available in the database and are handled in the same way as ordinary macro cells. In particular to guarantee compatibility with existing databases, such dummy cells can be introduced into the macro cell RNC without significant additional effort.

Advantageously, such approach does not need any adaptation of existing 3GPP equipment.

Advantageously, the 3GPP recommendation may be modified in order to allow a distinction in the NCL between macro cells and femto cells. This would bear the advantage that the mobile terminal does not need to search for femto cells if it does not have any subscription to a femto cell or if the mobile terminal is configured not to get connected to a femto system.

Such modification can be provided by adding an information element (IE)
"femto cell info"

which lists only the femto dummy cells in the NCL and allows the mobile terminal upon reception of the NCL to distinguish between potential macro cell candidates and potential femto cell candidates within the (actual) macro cell.

Such "femto cell info" IE can be added beside the "cell info" IE to the SYSTEM INFORMATION BLOCK 11 message according to 3GPP TS 25.331.

Hence, mobile terminals (UEs) without any subscription to a femto system would be able to ignore femto cells identified as such in the NCL.

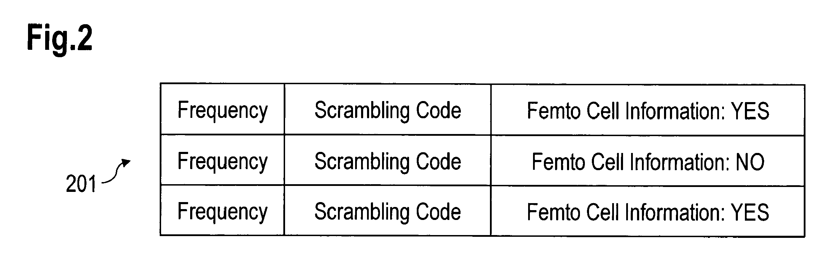

**Fig.2** shows a symbolic extract of a NCL 201 comprising three data entries (lines) with a frequency information, a scrambling code information and a femto cell information. Said parameters can be set as explained above, e.g., the femto cell information can be set differently (as an example according to Fig.2: "YES" and "NO") depending on the fact whether the frequency information and the scrambling code of the actual record are associated with at least one femto cell or not.

Furthermore, handling of a mobile terminal with a subscription to at least one femto cell may be optimized (in particular to save the mobile terminal's battery power), e.g., by providing different timers for measurement repetition (e.g., providing a timeout after a given period of time) or by restricting scanning to a limited set of reserved primary scrambling codes if a closed access scenario may apply.

As a further example, in order to avoid any handover and/or relocation of a mobile terminal to a femto cell, the approach described may be consistent with the legacy environment by broadcasting both SYSTEM INFORMATION BLOCK 11 and SYSTEM INFORMATION BLOCK 12 messages in the macro cells:
- SYSTEM INFORMATION BLOCK 11 is used by the mobile terminal in an IDLE MODE and it may convey a NCL including the femto dummy cells.
- SYSTEM INFORMATION BLOCK 12 is used by the mobile terminal in a CONNECTED MODE and it may include no femto dummy cell information.

This example ensures that the RNC will not trigger handover and/or relocation to a femto cell, if such scenario without handover and/or relocation is required.

### Support of Handover and/or Relocation from the macro cell to the femto cell

In order to enable handover and/or relocation from the macro cell to the femto cell, advantageously a unique identification of the femto cell chosen as target for such handover may be required, even though the information in the NCL regarding the femto cell is not unique.

Hence, this approach suggests enhancing measurement reporting of the mobile terminal for femto cells.

As requested by the macro cell's RNC, the mobile terminal searches for reserved scrambling codes of femto cells (see explanation provided above).

If the mobile terminal finds a reserved scrambling code which provides a sufficient degree of a reception level, the mobile terminal reads a unique identification of the femto cell (e.g., a 28bit cell ID of the femto cell) and includes this information in the MEASUREMENT REPORT sent to the RNC.

Upon reception of this measurement report, the RNC triggers a handover and/or relocation using a RELOCATION REQUIRED message. The unique femto cell identification is included in this RELOCATION REQUIRED message.

Just as for legacy relocation procedures, the RNC-ID of the femto gateway FGW can be used to route the RELOCATION REQUIRED / RELOCATION REQUEST messages to the FGW serving the actual femto cell. The correct RNC ID could be extracted, e.g., from the unique femto cell identification (e.g., the 28bit cell ID of the femto cell may include the RNC ID of the FGW).

From the unique identification of femto cell, the FGW will learn to which FAP the relocation request has to be forwarded.

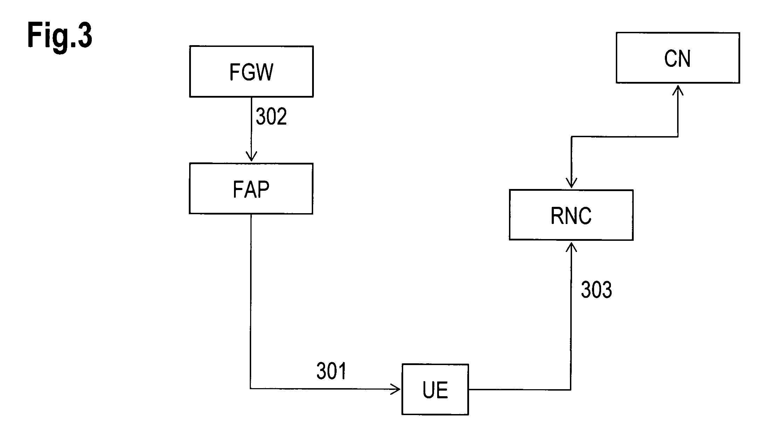

This scenario is also shown in Fig.3. The UE obtains the unique identification 301 of the femto access point FAP comprising the RNC identification 302 of the femto gateway FGW, e.g., by reading some FAP broadcasting channel.

This information 301 is included in a MEASUREMENT REPORT 303 that is sent to the radio network controller RNC. The radio network controller RNC and the core network CN are aware of the RNC ID of the femto gateway FGW and may hence initiate and/or process a handover and/or relocation to this femto gateway FGW, which from a network perspective comprises the functionality of a radio network controller.

The macro-cell RNC may in particular configured to use the identification of the femto gateway FGW for relocation purposes. The core network CN is able to route a RELOCATION REQUEST to the femto gateway FGW (identified by the RNC ID of the femto gateway) by virtue of its O&M database.

Further activities for handover and/or relocation (resource reservation in FAP; answer back to source RNC, etc.) may utilize existing UMTS procedures.

For this phase of handover and/or relocation, enhancement of 3GPP recommendations with impacts on the RNC as well as on the mobile terminal may be required. However, such enhancements can be easily realized.

### Further Advantages:

It is an advantage of this proposal that it allows a complete integration of femto cells into an existing UTRAN environment, including mobility support from the UTRAN to the femto system.

Using the proposed mechanism, the operator is not bothered with detailed planning of femto cells or with permanent updates of the macro cell databases.

This approach in particular allows for a significant reduction of operators' OPEX and it enables incorporation of femto cells into the UTRAN environment.

### Abbreviations:

- CN: Core Network
- DSL: Digital Subscriber Line
- FAP: Femto Access Point
- FGW: Femto Gateway
- HLR: Home Location Register
- HO: Handover
- MGW: Media Gateway
- MNO: Mobile Network Operator
- NCL: Neighbor Cell List
- O&M: Operation and Maintenance
- OPEX: Operational Expenditure
- P-SC: Primary Scrambling Code
- RAN: Radio Access Network
- RNC: Radio Network Controller
- UE: User Equipment
- UMTS: Universal Mobile Telecommunications System
- UTRAN: UMTS Terrestrial Radio Access Network

## Claims

1. A method for data processing in a communication network comprising the following steps:
- a mobile terminal obtains a scrambling code information, wherein said scrambling code information is reserved for a group of femto access points;
- the mobile terminal processes said scrambling code information.

2. The method according to claim 1, wherein the mobile terminal processes said scrambling code information by scanning for at least one femto access point or by not scanning for a femto access point.

3. The method according to any of the preceding claims, wherein the scrambling code information is provided by a base station of the communication network.

4. The method according to any of the preceding claims, wherein said scrambling code information is provided with a neighbor cell list.

5. The method according to claim 4, wherein the neighbor cell list further comprises a frequency information that is utilized by the mobile terminal.

6. The method according to any of claims 4 or 5, wherein the neighbor cell list is broadcast by and/or in a macro cell.

7. The method according to any of claims 4 to 6, wherein the neighbor cell list comprises a femto cell information that is associated with the scrambling code information.

8. The method according to claim 7, wherein the mobile terminal searches for the femto access point if the neighbor cell list indicates that the scrambling code information is used by a femto cell.

9. The method according to any of the preceding claims, wherein a scrambling code of the scrambling code information is used by more than one femto access point.

10. The method according to any of the preceding claims, wherein the mobile terminal obtains an identity information from the femto access point.

11. The method according to claim 10, wherein the identity information comprises an identifier of the femto access point.

12. The method according to any of claims 10 or 11, wherein the mobile terminal conveys the identity information to a radio network controller.

13. The method according to claim 12, wherein the identity information is conveyed via a measurement report from the mobile terminal to the radio network controller.

14. The method according to any of claims 12 or 13, wherein the radio network controller conveys the identity information to a core network.

15. The method according to claim 14, wherein the core network initiates and/or processes a handover and/or a relocation to the femto access point.

16. The method according to claim 15, wherein the identity information comprises an identifier of the femto gateway associated with the femto access point.

17. The method according to claim 16, wherein the handover and/or relocation is initiated and/or processed via the femto access gateway identified by its identifier.

18. A device for data processing comprising a processor unit and/or a hard-wired circuit that is arranged such that the method according to any of the preceding claims is executable thereon.

19. The device according to claim 18, wherein said device is a communication device, in particular a mobile terminal or a base station.

20. Communication system comprising the device according to any of claims 18 or 19.
